# EUROPEAN PATENT APPLICATION

(11) **EP 3 654 546 A1**
(43) Date of publication of application: **20.05.2020**
(21) Application number: 18832209.3
(22) Date of filing: 13.07.2018
(51) Int. Cl.: H04B 7/08

(54) **METHOD AND DEVICE FOR ANTENNA SWITCHING, ANTENNA SYSTEM, AND STORAGE MEDIUM**

(30) Priority: 14.07.2017 CN 201710574084
(71) Applicant: ZTE Corporation, Shenzhen, Guangdong 518057 (CN)
(72) Inventor: LI, Yuanyong, Shenzhen Guangdong 518057 (CN)
(74) Representative: Baudler, Ron
(86) International application number: PCT/CN2018/095630
(87) International publication number: WO 2019/011330

(57) **Abstract**

Provided in the present disclosure are an antenna switching method, an antenna switching device, an antenna system, and a storage medium. The antenna switching method includes: acquiring a strength of a first signal received by a receiving link coupled to a first antenna and a strength of a second signal received by a receiving link coupled to a second antenna; comparing strength of the first signal with the strength of the second signal to obtain a comparison result; and selecting to couple a transmitting link to the first antenna or the second antenna according to the comparison result.

## Description

### TECHNICAL FIELD

The present disclosure relates to the field of communication technologies, and in particular, to an antenna switching method, an antenna switching device, an antenna system, and a storage medium.

### BACKGROUND

To meet requirements of users, antennas are provided on many terminal products. However, the antennas have different performances in different scenarios. For example, in order to reduce a damage of antenna radiation to a user, an antenna with a transceiver function may be provided at a bottom of a mobile terminal, so that when the user uses the mobile terminal to make a call, the antenna is far away from a head of the user, and the antenna radiation is absorbed by the head of the user less, thereby reducing the damage of the mobile terminal to the head of the user when the mobile terminal transmits with high power. However, since the bottom of the mobile terminal is mostly held by a hand of the user, the antenna being provided at the bottom of the mobile terminal results in a large impact on the performance of the antenna.

### SUMMARY

The present disclosure provides an antenna system, including a first antenna, a second antenna, an antenna switch, and a processor, the first antenna is coupled to a first receiving link, the second antenna is coupled to a second receiving link, the first antenna or the second antenna is coupled to a transmitting link via the antenna switch, the processor is configured to: acquire a strength of a first signal received by the first receiving link via the first antenna and a strength of a second signal received by the second receiving link via the second antenna; compare the strength of the first signal with the strength of the second signal to obtain a comparison result; and control the antenna switch to be switched according to the comparison result, so that the transmitting link is coupled to the first antenna or the second antenna through the antenna switch.

The present disclosure further provides an antenna switching method, including: acquiring a strength of a first signal received by a receiving link coupled to a first antenna and a strength of a second signal received by a receiving link coupled to a second antenna; comparing the strength of the first signal with the strength of the second signal to obtain a comparison result; and selecting to couple a transmitting link to the first antenna or the second antenna according to the comparison result.

The present disclosure further provides an antenna switching device, including: an acquiring module configured to acquire a strength of a first signal received by a receiving link coupled to a first antenna and a strength of a second signal received by a receiving link coupled to a second antenna; a comparing module configured to compare the strength of the first signal with the strength of the second signal to obtain a comparison result; and a selector module configured to select to couple a transmitting link to the first antenna or the second antenna according to the comparison result.

The present disclosure further provides a storage medium storing a program including executable instructions, when the program is executed by a processor, the processor performs the antenna switching method according to the present disclosure.

### BRIEF DESCRIPTION OF THE DRAWINGS

The accompanying drawings are included to provide a further explanation of the present disclosure, and are incorporated in and constitute a part of the present disclosure, embodiments of the present disclosure will be described in detail below in conjunction with the accompanying drawings, the embodiments and descriptions thereof are considered to only illustrate the present disclosure and is not intended to limit the present disclosure. In the drawings,
Fig. 1 is a schematic diagram illustrating an antenna switching scheme;
Fig. 2 is a flowchart illustrating an antenna switching method according to an embodiment of the present disclosure;
Fig. 3 is a schematic diagram illustrating an antenna switching scheme according to an embodiment of the present disclosure;
Fig. 4 is a block diagram illustrating an antenna switching device according to an embodiment of the present disclosure;
Fig. 5 is a block diagram illustrating a terminal product to which an antenna switching method according to an embodiment of the present disclosure is applied.

### DETAILED DESCRIPTION

It should be noted that, without conflict, features of the embodiments of the present disclosure may be combined arbitrarily.

In addition, it should be noted that terms "first" and "second" in the present disclosure are used only for distinguishing the same or similar objects, and are not used for describing a specific order, and thus may be omitted in a case where no distinction is required.

In order to enable a user to have good experiences when using a terminal product in different scenes, the terminal product may include a main antenna having a transceiver function and an auxiliary antenna having a secondary receiving function or a Multiple Input Multiple Output (MIMO) receiving function, and may have an antenna switching function to ensure that the terminal product has good radio frequency performances in different scenes.

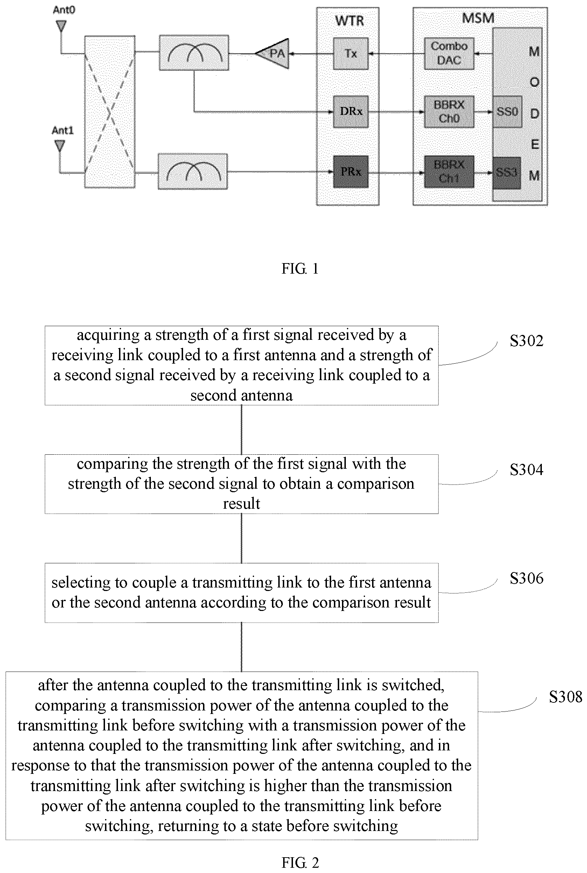

Fig. 1 shows a schematic diagram illustrating an antenna switching way. As shown in Fig. 1, it is assumed that a terminal product includes a first antenna AntO and a second antenna Ant1, and in a default state, the first antenna AntO as a main antenna is coupled to a first radio frequency channel and has a transceiver function, and the second antenna Ant1 as an auxiliary antenna is coupled to a second radio frequency channel and has a secondary receiving function. The first radio frequency channel includes a transmitting link and a primary receiving link, and the second radio frequency channel includes a secondary receiving link. The first antenna AntO may be coupled to the first radio frequency channel or the second radio frequency channel via an antenna switch (e.g., may be a double-pole double-throw (DPDT) switch), and the second antenna Ant1 may also be coupled to the first radio channel or the second radio channel via the antenna switch. That is, the primary receiving link and the transmitting link of the first radio frequency channel as a whole may be coupled to the first antenna AntO or the second antenna Ant1 via the antenna switch, and the secondary receiving link of the second radio frequency channel may be coupled to the first antenna AntO or the second antenna Ant1 via the antenna switch. In a case where the first antenna AntO is coupled to the first radio frequency channel and the second antenna Ant1 is coupled to the second radio frequency channel, in response to that a strength of a signal received by the secondary receiving link of the second radio frequency channel via the second antenna Ant1 is higher than a strength of a signal received by the primary receiving link of the first radio frequency channel via the first antenna AntO (that is, a receiving performance of the second antenna Ant1 is better than that of the first antenna AntO), the antenna switch may be controlled to be switched, so that the first antenna AntO is coupled to the second radio frequency channel, and the second antenna Ant1 is coupled to the first radio frequency channel, so that the first antenna AntO is used for the secondary receiving function, and the second antenna Ant1 is used for the transceiver function, so as to ensure that the mobile terminal has a good radio frequency performance.

With the antenna switching scheme shown in Fig. 1, a relatively good antenna may be selected for transmission according to the receiving performance of the antenna.

However, the antenna switching scheme shown in Fig. 1 has at least following defects: (1) an insertion loss introduced by the antenna switch has a certain influence on a receiving performance and a transmitting performance of a terminal product; (2) in response to the antenna switch being switched, receiving performances of the first antenna AntO and the second antenna Ant1 have a hopping phenomenon, and therefore, the receiving performances of the first antenna AntO and the second antenna Ant1 often need to be reevaluated.

Fig. 2 is a flowchart illustrating an antenna switching method according to an embodiment of the present disclosure. As shown in Fig. 2, the method antenna switching according to the embodiment of the present disclosure includes following steps: S302, acquiring a strength of a first signal received by a receiving link coupled to a first antenna and a strength of a second signal received by a receiving link coupled to a second antenna; S304, comparing the strength of the first signal with the strength of the second signal to obtain a comparison result; and S306, selecting to couple a transmitting link to the first antenna or the second antenna according to the comparison result.

By using the antenna switching method according to the embodiment of the present disclosure, only the antenna coupled to the transmitting link is switched, so that only the transmitting link requires to be provided with the antenna switch, and no antenna switch is required to be provided on the receiving link, thereby avoiding an influence of insertion loss introduced by the antenna switch on the receiving performance.

Moreover, with the antenna switching method according to the embodiment of the present disclosure, the receiving link coupled to the first antenna and the receiving link coupled to the second antenna maintain unchanged, so there is no phenomenon of hopping in the receiving performances of the first antenna AntO and the second antenna Ant1.

In some implementations, step S306 includes: in a case where the transmitting link is coupled to the first antenna, in response to that the strength of the second signal is higher than that of the first signal, switching the transmitting link to be coupled to the second antenna, and in response to that the strength of the second signal is not higher than that of the first signal, maintaining the transmitting link coupled to the first antenna; in a case where the transmitting link is coupled to the second antenna, in response to that the strength of the first signal is higher than that of the second signal, switching the transmitting link to be coupled to the first antenna, and in response to that the strength of the first signal is not higher than that of the second signal, maintaining the transmitting link coupled to the second antenna.

In some implementations, in a case where the transmitting link is coupled to the first antenna, in response to that the strength of the second signal is higher than the strength of the first signal by a predetermined value, the transmitting link is switched to be coupled to the second antenna, and in response to that the strength of the second signal is not higher than the strength of the first signal by the predetermined value, the transmitting link maintains coupled to the first antenna; in a case where the transmitting link is coupled to the second antenna, in response to that the strength of the first signal is higher than that of the second signal by the predetermined value, the transmitting link is switched to be coupled to the first antenna, and in response to that the strength of the first signal is not higher than that of the second signal by the predetermined value, the transmitting link maintains coupled to the second antenna.

It should be noted that the predetermined value may be set as required, and is not specifically limited herein.

In some implementations, the antenna switching method according to the embodiment of the present disclosure further includes a step: S308, after the antenna coupled to the transmitting link is switched, comparing a transmission power of the antenna coupled to the transmitting link before switching with a transmission power of the antenna coupled to the transmitting link after switching, and in response to that the transmission power of the antenna coupled to the transmitting link after switching is higher than the transmission power of the antenna coupled to the transmitting link before switching, returning to a state before switching.

That is, after the antenna coupled to the transmitting link is switched, in response to that the transmission power of the antenna coupled to the transmitting link after switching is higher than the transmission power of the antenna coupled to the transmitting link before switching, in order to reduce power consumption, the state before the antenna coupled to the transmitting link is switched may be restored.

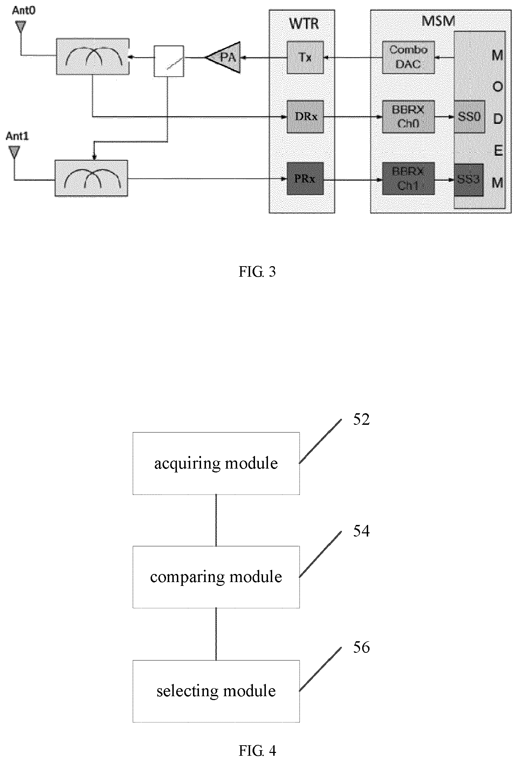

Fig. 3 shows a schematic diagram of an antenna switching scheme according to an embodiment of the present disclosure. As shown in Fig. 3, it is assumed that the terminal product includes a first antenna AntO and a second antenna Ant1, and in a default state, the first antenna AntO as a main antenna is coupled to a first radio frequency channel and has a transceiver function, and the second antenna Ant1 as an auxiliary antenna is connected to a second radio frequency channel and has a secondary receiving function. The first radio frequency channel includes a transmitting link and a primary receiving link, and the second radio frequency channel includes a secondary receiving link. The primary receiving link of the first radio frequency channel may be fixedly coupled to the first antenna Ant0, the transmitting link of the first radio frequency channel may be coupled to the first antenna AntO or the second antenna Ant1 via an antenna switch (e.g., may be a Single Pole Double Throw (SPDT) switch), and the secondary receiving link of the second radio frequency channel may be fixedly coupled to the second antenna Ant1. In a case where the transmitting link of the first radio frequency channel is coupled to the first antenna Ant0, in response to that a strength of a signal received by the secondary receiving link of the second radio frequency channel via the second antenna Ant1 is higher than a strength of a signal received by the primary receiving link of the first radio frequency channel via the first antenna AntO (that is, a receiving performance of the second antenna Ant1 is better than that of the first antenna AntO), the antenna switch may be controlled to be switched so that the transmitting link of the first radio frequency channel is coupled to the second antenna Ant1, and in response to that the strength of the signal received by the secondary receiving link of the second radio frequency channel via the second antenna Ant1 is not higher than that of the signal received by the primary receiving link of the first radio frequency channel via the first antenna Ant0, the transmitting link of the first radio frequency channel maintains coupled to the first antenna AntO.

With the antenna switching scheme shown in Fig. 3, a relatively good antenna can be selected for transmission according to the receiving performance of the antenna.

Compared with the antenna switching scheme shown in Fig. 1, in the antenna switching scheme shown in Fig. 3, an insertion loss introduced by the antenna switch only has a certain influence on the transmitting performance of the terminal product, and the antenna switch does not have an influence on the receiving performance of the antenna when switched.

In some implementations, in a case where the transmitting link of the first radio frequency channel is coupled to the second antenna Ant1, in response to that the strength of the signal received by the primary receiving link of the first radio frequency channel via the first antenna AntO is higher than the strength of the signal received by the secondary receiving link of the second radio frequency channel via the second antenna Ant1, the antenna switch may be controlled to be switched such that the transmitting link of the first radio frequency channel is coupled to the first antenna Ant0, and in response to that the strength of the signal received by the primary receiving link of the first radio frequency channel via the first antenna AntO is not higher than the strength of the signal received by the secondary receiving link of the second radio frequency channel via the second antenna Ant1, the transmitting link of the first radio frequency channel maintains coupled to the second antenna Ant1.

Certainly, after the antenna coupled to the transmitting link of the first radio frequency channel is switched, the transmission power of the antenna coupled to the transmitting link of the first radio frequency channel before switching is compared with the transmission power of the antenna coupled to the transmitting link of the first radio frequency channel after switching, and in response to that the transmission power of the antenna coupled to the transmitting link of the first radio frequency channel after switching is higher than the transmission power of the antenna coupled to the transmitting link of the first radio frequency channel before switching, it returns to the state before switching.

The above description has been given only by taking a case where the terminal product includes a primary receiving link and a secondary receiving link as an example, however, the present disclosure is not limited thereto, and in practical applications, the terminal product may have a Multiple Input Multiple Output (MIMO) receiving function, and thus, may include a plurality of receiving links in parallel.

An embodiment of the present disclosure further provides an antenna switching device. Fig. 4 shows a block diagram of an antenna switching device according to an embodiment of the present disclosure. As shown in Fig. 4, the antenna switching device according to the embodiment of the present disclosure includes: an acquiring module 52 configured to acquire a strength of a first signal received by a receiving link coupled to a first antenna and a strength of a second signal received by a receiving link coupled to a second antenna; a comparing module 54 configured to compare the strength of the first signal with the strength of the second signal to obtain a comparison result; a selecting module 56 configured to select to couple a transmitting link to the first antenna or the second antenna according to the comparison result.

In some implementations, the selecting module 56 is configured to: in a case where the transmitting link is coupled to the first antenna, in response to that the strength of the second signal is higher than that of the first signal, switch the transmitting link to be coupled to the second antenna, and in response to that the strength of the second signal is not higher than that of the first signal, maintain the transmitting link coupled to the first antenna; in a case where the transmitting link is coupled to the second antenna, in response to that the strength of the first signal is higher than that of the second signal, switch the transmitting link to be connected to the first antenna, and in response to that the strength of the first signal is not higher than that of the second signal, maintain the transmitting link coupled to the second antenna.

In some implementations, in a case where the transmitting link is coupled to the first antenna, in response to that the strength of the second signal is higher than the strength of the first signal by a predetermined value, the transmitting link is switched to be coupled to the second antenna, and in response to that the strength of the second signal is not higher than the strength of the first signal by the predetermined value, the transmitting link maintains coupled to the first antenna; in a case where the transmitting link is coupled to the second antenna, in response to that the strength of the first signal is higher than that of the second signal by the predetermined value, the transmitting link is switched to be coupled to the first antenna, and in response to that the strength of the first signal is not higher than that of the second signal by the predetermined value, the transmitting link maintains coupled to the second antenna.

It should be noted that the predetermined value may be set as required, and is not specifically limited herein.

In some implementations, the selecting module 56 of the antenna switching device according to the embodiment of the present disclosure is further configured to, after the antenna coupled to the transmitting link is switched, compare a transmission power of the antenna connected to the transmitting link before switching with a transmission power of the antenna connected to the transmitting link after switching, and return to a state before switching in response to that the transmission power of the antenna connected to the transmitting link after switching is higher than the transmission power of the antenna coupled to the transmitting link before switching.

It should be noted that the above modules may be implemented by software, hardware or a combination thereof, for example, the modules may be provided by a program including executable instructions, and the program is executed by one or more processors to implement corresponding functions.

An embodiment of the present disclosure further provide an antenna system including a first antenna coupled to a first receiving link, a second antenna coupled to a second receiving link, an antenna switch via which the first antenna or the second antenna may be connected to a transmitting link, and a processor configured to: acquire a strength of a first signal received by the first receiving link via the first antenna and a strength of a second signal received by the second receiving link via the second antenna; compare the strength of the first signal with the strength of the second signal to obtain a comparison result; and control the antenna switch to be switched according to the comparison result so that the transmitting link is coupled to the first antenna or the second antenna through the antenna switch.

In some implementations, the antenna system further includes a first filter and a second filter. The first antenna is coupled to the first receiving link via the first filter, the second antenna is coupled to the second receiving link via the second filter, the transmitting link is coupled to the first antenna via the first filter or coupled to the second antenna via the second filter, and the first filter and the second filter are configured to perform filtering processing.

In some implementations, the antenna system further includes a power amplifier, and the transmitting link is coupled to the first antenna or the second antenna via the power amplifier and the antenna switch.

In some implementations, the processor of the antenna system is configured to: in a case where the transmitting link is coupled to the first antenna, in response to that the strength of the second signal is higher than that of the first signal, control the antenna switch to be switched so that the transmitting link is coupled to the second antenna via the antenna switch, and in response to that the strength of the second signal is not higher than that of the first signal, maintain the transmitting link coupled to the first antenna; in a case where the transmitting link is coupled to the second antenna, in response to that the strength of the first signal is higher than that of the second signal, control the antenna switch to be switched so that the transmitting link is coupled to the first antenna via the antenna switch, and in response to that the strength of the first signal is not higher than that of the second signal, maintain the transmitting link coupled to the second antenna.

In some implementations, the processor of the antenna system is configured to: in a case where the transmitting link is coupled to the first antenna, in response to that the strength of the second signal is higher than that of the first signal by a predetermined value, control the antenna switch to be switched so that the transmitting link is coupled to the second antenna via the antenna switch, and in response to that the strength of the second signal is not higher than that of the first signal by the predetermined value, maintain the transmitting link coupled to the first antenna; in a case where the transmitting link is coupled to the second antenna, in response to that the strength of the first signal is higher than the strength of the second signal by the predetermined value, control the antenna switch to be switched so that the transmitting link is coupled to the first antenna via the antenna switch, and in response to that the strength of the first signal is not higher than the strength of the second signal by the predetermined value, maintain the transmitting link coupled to the second antenna.

It should be noted that the predetermined value may be set as required, and is not specifically limited herein.

In some implementations, the processor of the antenna system is further configured to: after the antenna coupled to the transmitting link is switched, compare a transmission power of the antenna coupled to the transmitting link before switching with a transmission power of the antenna coupled to the transmitting link after switching, and in response to that the transmission power of the antenna coupled to the transmitting link after switching is higher than the transmission power of the antenna coupled to the transmitting link before switching, return to a state before switching.

An embodiment of the present disclosure further provides a storage medium storing a program including executable instructions, and when the program is executed by a processor, the processor performs the antenna switching method according to the embodiment of the present disclosure.

The computer readable storage medium may include, but is not limited to, a USB disk, a Read-Only Memory (ROM), a Random Access Memory (RAM), a removable hard disk, a magnetic disk, an optical disk, and the like.

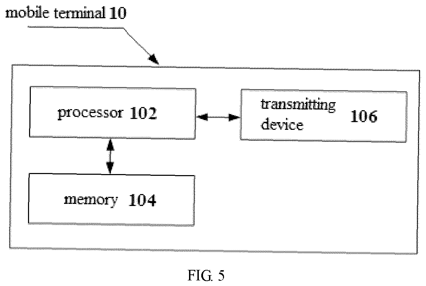

Fig. 5 shows a block diagram of a terminal product to which an antenna switching method according to an embodiment of the present disclosure is applied. As shown in Fig. 5, a terminal product 10 to which the antenna switching method according to the embodiment of the present disclosure is applied may include a processor 102, a memory 104, and a transmitting device 106.

The transmitting device 106 may include a first antenna coupled to a first receiving link, and a second antenna coupled to a second receiving link. The first antenna or the second antenna may be coupled to a transmitting link via an antenna switch.

The memory 104 stores a program including executable instructions, and the processor 102 is configured to execute the program stored by the memory 104 to perform steps of: acquiring a strength of a first signal received by the first receiving link via the first antenna and a strength of a second signal received by the second receiving link via the second antenna; comparing the strength of the first signal with the strength of the second signal to obtain a comparison result; and controlling an antenna switch to be switched according to the comparison result so that a transmitting link is coupled to the first antenna or the second antenna through the antenna switch.

It should be understood that the terminal product shown in Fig. 5 is only an example and is not intended to limit the present disclosure. For example, the terminal product 10 may include more or fewer elements than shown in Fig. 5, or may have a different configuration than shown in Fig. 5.

For example, in some implementations, the memory 104 may be provided remotely from the processor 102 and then coupled to the processor 102 over a network. Examples of such network include, but are not limited to, internet, intranet, local area network, mobile communication network, combinations thereof, or the like. The transmitting device 106 may transmit data via the network.

By way of example, the terminal product 10 may be a mobile terminal such as a cell phone, a set-top box, or the like.

It should be understood by those skilled in the art that the modules or steps of the embodiments of the present disclosure may be implemented by software in combination with a general purpose computing device, they may be implemented by a single computing device, or they may be implemented by being distributed over a plurality of computing devices, in some cases, the illustrated or described steps may be performed in an order different than that shown herein, the modules or steps of the embodiments of the present disclosure may be fabricated separately as individual integrated circuits, or all or part of them may be integrated into a single integrated circuit. The present disclosure is not limited to any specific form of combination of hardware and software.

The described embodiments are merely exemplary embodiments of the present disclosure and are not intended to limit the scope of the present disclosure, which may be variously modified and varied by those skilled in the art. Any modification and equivalent replacement made without departing from the concept of the present disclosure should be considered to fall within the protection scope of the present disclosure.

## Claims

1. An antenna system, comprising a first antenna connected to a first receiving link, a second antenna connected to a second receiving link, an antenna switch, through which the first antenna or the second antenna is coupled to a transmitting link, and a processor, the processor configured to:
acquire a strength of a first signal received by the first receiving link via the first antenna and a strength of a second signal received by the second receiving link via the second antenna;
compare the strength of the first signal with the strength of the second signal to obtain a comparison result; and
control the antenna switch to be switched according to the comparison result, so that the transmitting link is coupled to the first antenna or the second antenna through the antenna switch.

2. The antenna system of claim 1, further comprising a first filter and a second filter, wherein the first antenna is coupled to the first receiving link via the first filter, the second antenna is coupled to the second receiving link via the second filter, and the transmitting link is coupled to the first antenna via the first filter or to the second antenna via the second filter.

3. The antenna system of claim 1, further comprising a power amplifier, wherein the transmitting link is coupled to the first antenna or the second antenna via the power amplifier and the antenna switch.

4. The antenna system of claim 1, wherein the processor is configured to:
in response to that the transmitting link is coupled to the first antenna, and in response to that the strength of the second signal is higher than that of the first signal, control the antenna switch to be switched so that the transmitting link is coupled to the second antenna via the antenna switch, and in response to that the strength of the second signal is not higher than that of the first signal, maintain the transmitting link coupled to the first antenna; and
in response to that that the transmitting link is coupled to the second antenna, and in response to that the strength of the first signal is higher than that of the second signal, control the antenna switch to be switched so that the transmitting link is coupled to the first antenna via the antenna switch, and in response to that the strength of the first signal is not higher than that of the second signal, maintain the transmitting link coupled to the second antenna.

5. The antenna system of claim 4, wherein the processor is further configured to:
in response to that the antenna coupled to the transmitting link is switched, compare a transmission power of the antenna coupled to the transmitting link before switching with a transmission power of the antenna coupled to the transmitting link after switching, and in response to that the transmission power of the antenna coupled to the transmitting link after switching is higher than the transmission power of the antenna coupled to the transmitting link before switching, return to a state before switching.

6. An antenna switching method, comprising:
acquiring a strength of a first signal received by a receiving link coupled to a first antenna and a strength of a second signal received by a receiving link coupled to a second antenna;
comparing the strength of the first signal with the strength of the second signal to obtain a comparison result; and
selecting to couple a transmitting link to the first antenna or the second antenna according to the comparison result.

7. The method of claim 6, wherein selecting to couple the transmitting link to the first antenna or the second antenna according to the comparison result comprises:
in response to that the transmitting link is coupled to the first antenna, and in response to that the strength of the second signal is higher than that of the first signal, switching the transmitting link to be coupled to the second antenna, and in response to that the strength of the second signal is not higher than that of the first signal, maintaining the transmitting link coupled to the first antenna; and
in response to that the transmitting link is coupled to the second antenna, and in response to that the strength of the first signal is higher than that of the second signal, switching the transmitting link to be coupled to the first antenna, and in response to that the strength of the first signal is not higher than that of the second signal, maintaining the transmitting link coupled to the second antenna.

8. The method of claim 7, further comprising:
in response to that the antenna coupled to the transmitting link is switched, comparing a transmission power of the antenna coupled to the transmitting link before switching with a transmission power of the antenna coupled to the transmitting link after switching, and in response to that the transmission power of the antenna coupled to the transmitting link after switching is higher than the transmission power of the antenna coupled to the transmitting link before switching, returning to a state before switching.

9. An antenna switching device, comprising:
an acquiring module configured to acquire a strength of a first signal received by a receiving link coupled to a first antenna and a strength of a second signal received by a receiving link coupled to a second antenna;
a comparing module configured to compare the strength of the first signal with the strength of the second signal to obtain a comparison result; and
a selecting module configured to select to couple a transmitting link to the first antenna or the second antenna according to the comparison result.

10. A storage medium storing a program comprising executable instructions which, when executed by a processor, cause the processor to perform the antenna switching method according to any one of claims 6 to 8.
